# EUROPÄISCHE PATENTSCHRIFT

(11) **EP 2 729 349 B1**
(45) Veröffentlichungstag und Bekanntmachung des Hinweises auf die Patenterteilung: **21.12.2016**
(21) Anmeldenummer: 12740303.8
(22) Anmeldetag: 03.07.2012
(51) Int. Cl.: B62D 21/11, B60K 5/00, F41H 7/04, B62D 65/10

(54) **FAHRZEUG SOWIE VERFAHREN ZUR MONTAGE EINES ANTRIEBSAGGREGATS**
VEHICLE AND METHOD FOR MOUNTING A DRIVE ASSEMBLY
VÉHICULE AINSI QUE PROCÉDÉ DESTINÉ AU MONTAGE D'UNE UNITÉ D'ENTRAÎNEMENT

(30) Priorität: 08.07.2011 DE 102011051687
(43) Veröffentlichungstag der Anmeldung: 14.05.2014
(73) Patentinhaber: Krauss-Maffei Wegmann GmbH & Co. KG, 80997 München (DE)
(72) Erfinder: HOPPE, Tobias, 34127 Kassel (DE); LANDGREBE, Achim, 34127 Kassel (DE)
(74) Vertreter: Feder Walter Ebert
(86) Internationale Anmeldenummer: PCT/DE2012/100197
(87) Internationale Veröffentlichungsnummer: WO 2013/007249

(56) Entgegenhaltungen:
- EP-A2- 0 278 479
- DE-A1- 10 045 749
- DE-A1- 19 860 794
- FR-A1- 2 916 528
- US-A1- 2010 163 330

## Beschreibung

Die Erfindung betrifft ein Fahrzeug, insbesondere ein militärisches Fahrzeug, mit einer selbsttragend ausgebildeten Fahrzeugkarosserie und einem Antriebsaggregat zum Antrieb des Fahrzeugs, wobei das Antriebsaggregat über einen Aggregatträger mit der Fahrzeugkarosserie verbunden ist, wobei der Aggregatträger einen Teil der Tragstruktur der Fahrzeugkarosserie bildet. Einen weiteren Gegenstand der Erfindung bildet ein Verfahren zur Montage eines Antriebsaggregats in einem eine selbsttragend ausgebildete Fahrzeugkarosserie aufweisenden Fahrzeug, wobei das Antriebsaggregat über einen Aggregatträger mit der Fahrzeugkarosserie verbunden wird und der Aggregatträger im montierten Zustand einen Teil der Tragstruktur der Fahrzeugkarosserie bildet.

Moderne Fahrzeuge weisen im Gegensatz zur klassischen Rahmenbauweise, bei welcher die tragenden Fahrzeugteile von einem aus Längs- und Querträgern bestehenden Rahmen gebildet werden, häufig eine selbsttragend ausgebildete Fahrzeugkarosserie auf. Bei selbsttragend ausgebildeten Fahrzeugkarosserien wird die Tragfunktion nicht von einem separaten Rahmen, sondern von den Karosseriebauteilen selbst, wie Blechen, Beplankungen, Verstärkungen usw. übernommen, die oftmals unlösbar miteinander verbunden sind.

Im Bereich militärischer Fahrzeuge werden derart selbsttragend ausgebildete Fahrzeugkarosserien oftmals auch als Fahrzeugwannen bezeichnet, bei welchen sich aufgrund des im militärischen Bereich erwünschten hohen Maßes an Geländegängigkeit besondere Anforderungen an die Struktursteifigkeit des Fahrzeugs ergeben. Aus diesem Grund werden die Fahrzeugskarosserien über an der Fahrzeugkarosserie bzw. Fahrzeugwanne angeordnete Versteifungselemente verstärkt, was üblicherweise mit einer Erhöhung des Gewichts der Fahrzeugwanne einhergeht. An der ausgesteiften Fahrzeugwanne werden dann weitere Fahrzeugkomponenten wie beispielsweise das Antriebsaggregat des Fahrzeugs montiert.

Üblichweise sind zur Montage des Antriebsaggregats fahrzeugfeste Aufnahmepunkte an der Fahrzeugkarosserie vorgesehen, über welche sich die einzelnen Teile des Antriebsaggregats mit der Fahrzeugkarosserie verbinden lassen. Die Aufnahmepunkte weisen jedoch den Nachteil auf, dass diese oftmals nur schwer zugänglich sind und eine aufwändige Montage der einzelnen Komponenten des Antriebsaggregats bedingen.

Die DE 100 45 749 betrifft ein Fahrzeug mit einer gitterförmigen Tragstruktur, an welcher ein Vorderachsmodul angeordnet ist.

Aufgabe der Erfindung ist es, eine Verbindung zwischen einem Antriebsaggregat und einer selbsttragend ausgebildeten Karosserie anzugeben, welche sich durch eine einfache, nur wenige Schritte erfordernde Montage auszeichnet und eine insgesamt leichtgewichtige Bauweise des Fahrzeugs erlaubt.

Diese Aufgabe wird bei einem Fahrzeug der eingangs genannten Art dadurch gelöst, dass das Antriebsaggregat über einen Aggregatträger mit der Fahrzeugkarosserie verbunden ist, wobei der Aggregatträger einen Teil der Tragstruktur der Fahrzeugkarosserie bildet.

Durch die Verwendung von Aggregatträgern lässt sich das Antriebsaggregat mit wenigen Handgriffen als vormontierte Einheit auf einfache Weise mit der selbsttragenden Fahrzeugkarosserie verbinden. Im montierten Zustand bilden die Aggregatträger einen Teil der Tragstruktur der Fahrzeugkarosserie, so dass durch die Montage des Antriebsaggregats die Steifigkeit der Fahrzeugkarosserie signifikant erhöht wird. Die Aggregatträger bilden Versteifungselemente der Fahrzeugkarosserie, so dass sich zusätzliche Versteifungselemente einsparen und damit eine leichtgewichtige Bauweise erreichen lässt.

Erfindungsgemäß ist vorgesehen, dass das Antriebsaggregat ein erstes, insbesondere als Motor-/Getriebeeinheit ausgebildetes Antriebsmodul und ein zweites, insbesondere als Antriebsachse ausgebildetes Antriebsmodul aufweist, die über separate Aggregatträger mit der Fahrzeugkarosserie verbunden sind. Die Verwendung separater Aggregatträger für die beiden Antriebsmodule erlaubt eine modulweise Montage der Antriebsmodule in zwei Arbeitschritten, wobei die beiden Antriebsmodule aus unterschiedlichen Richtungen kommend mit der Fahrzeugkarosserie verbunden werden können. Zudem ergibt sich eine zweifache Aussteifung der Fahrzeugkarosserie.

Weiterhin ist erfindungsgemäß vorgesehen, dass ein Aggregatträger als Montageeinheit mit dem ersten Antriebsmodul von oben her und ein Aggregatträger als Montageeinheit mit dem zweiten Antriebsmodul von unten her mit der Fahrzeugkarosserie verbunden ist.

Eine weitere Ausgestaltung sieht vor, dass die Aggregatträger jeweils einen Aufnahmebereich zur Aufnahme des Antriebsmoduls und einen in die Tragstruktur der Fahrzeugkarosserie integrierten Versteifungsbereich aufweisen. An dem Aufnahmebereich kann das jeweilige Antriebsmodul festgelegt werden. Nach erfolgter Montage ist der Versteifungsbereich in die Tragstruktur der Fahrzeugkarosserie integriert und steift diese aus.

Von konstruktivem Vorteil ist eine Ausgestaltung, nach welcher die Versteifungsbereiche von in die Tragstruktur der Fahrzeugkarosserie integrierten Längs- und/oder Querträgern gebildet werden. Über die Längs- bzw. Querträger können die im Fahrbetrieb auftretenden Lasten eingeleitet werden, ohne dass sich die Fahrzeugkarosserie übermäßig verformt.

In diesem Zusammenhang wird weiter vorgeschlagen, dass der Versteifungsbereich des ersten Aggregatträgers von einem sich oberhalb des Aufnahmebereichs erstreckenden Querträger gebildet wird. Über den Querträger werden die für den Fahrbetrieb erforderlichen Lastpfade vervollständigt.

Darüber hinaus wird vorgeschlagen, dass der Versteifungsbereich des zweiten Aggregatträgers von sich unterhalb des Aufnahmebereichs erstreckenden Längs- und/oder Querträgern gebildet wird. Über die Längs- bzw. Querträger werden die für den Fahrbetrieb erforderlichen Lastpfade vervollständigt.

In konstruktiver Weiterbildung wird vorgeschlagen, dass die Versteifungsbereiche über kraft- und formschlüssige Fügestellen in die Tragstruktur der Fahrzeugkarosserie eingebunden sind, wodurch sich eine zuverlässige Aussteifung der Fahrzeugkarosserie ergibt.

Darüber hinaus wird zur Lösung der vorstehend genannten Aufgabe bei einem Verfahren der eingangs genannten Art vorgeschlagen, dass das Antriebsaggregat über einen Aggregatträger mit der Fahrzeugkarosserie verbunden wird und der Aggregatträger im montierten Zustand einen Teil der Tragstruktur der Fahrzeugkarosserie bildet.

Durch die Verwendung von Aggregatträgern lässt sich das Antriebsaggregat mit wenigen Handgriffen als vormontierte Einheit auf einfache Weise mit der selbsttragenden Fahrzeugkarosserie verbinden. Im montierten Zustand bilden die Aggregatträger einen Teil der Tragstruktur der Fahrzeugkarosserie, so dass die für die Aufnahme der im Fahrbetrieb auftretenden Lasten erforderliche Steifigkeit durch die Montage des Antriebsaggregats erreicht wird. Die Aggregatträger bilden Versteifungselemente der Fahrzeugkarosserie, so dass sich zusätzliche Versteifungselemente einsparen und damit eine leichtgewichtige Bauweise erreichen lässt.

In Weiterbildung des Verfahrens wird vorgeschlagen, dass das Antriebsaggregat ein erstes, insbesondere als Motor-/Getriebeeinheit ausgebildetes Antriebsmodul und ein zweites, insbesondere als Antriebsachse ausgebildetes Antriebsmodul aufweist, die über separate Aggregatträger mit der Fahrzeugkarosserie verbunden werden.

Eine weitere Ausgestaltung sieht im Hinblick auf eine einfache Montage vor, dass zunächst die Aggregatträger mit der Fahrzeugkarosserie und anschließend die Antriebsmodule miteinander verbunden werden.

Weiterhin wird vorgeschlagen, dass ein Aggregatträger als vormontierte Montageeinheit mit dem ersten Antriebsmodul und ein Aggregatträger als vormontierte Montageeinheit mit dem zweiten Antriebsmodul mit der Fahrzeugkarosserie verbunden wird. Auf diese Weise lässt sich der Montageaufwand beim Einsetzen des aus zwei Antriebsmodulen bestehenden Antriebsaggregats in die Fahrzeugkarosserie verringern.

Von montagetechnischem Vorteil ist schließlich eine Ausgestaltung, nach welcher ein Aggregatträger von oben her und ein Aggregatträger von unten her mit der Fahrzeugkarosserie verbunden wird.

Weiter wird vorgeschlagen, dass die Aggregatträger jeweils einen Aufnahmebereich zur Aufnahme des Antriebsmoduls und einen Versteifungsbereich aufweisen, der in die Tragstruktur der Fahrzeugwanne integriert wird.

Schließlich wird vorgeschlagen, dass die Versteifungsbereiche über kraft- und formschlüssige Fügestelle in die Tragstruktur der Fahrzeugkarosserie eingebunden werden, so dass diese die im Fahrbetrieb auftretenden Lasten zuverlässig aufnehmen können.

Weitere Einzelheiten und Vorteile der Erfindung werden nachfolgend unter Zuhilfenahme der beigefügten Darstellungen eines Ausführungsbeispiels erläutert. Darin zeigen:
- Fig. 1: in perspektivischer Ansicht einen Teil einer Fahrzeugkarosserie mit zwei Aggregatträgern vor deren Montage, wobei das Antriebsmodul aus Gründen der Übersichtlichkeit nicht dargestellt ist,
- Fig. 2: eine der Darstellung in Fig. 1 entsprechende Darstellung mit montierten Aggregatträgern,
- Fig. 3: eine der Darstellung in Fig. 1 ähnliche Darstellung mit den in den Aggregatträgern aufgenommenen Antriebsmodulen,
- Fig. 4: eine perspektivische Darstellung der Aggregatträger,
- Fig. 5: eine seitliche Ansicht der Aggregatträger,

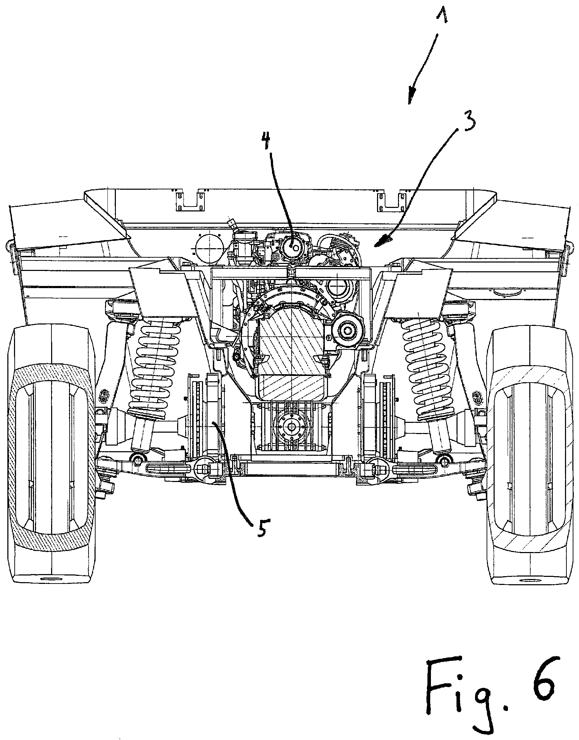

- Fig. 6: eine Schnittansicht eines mit der Fahrzeugkarosserie verbundenen Antriebsaggregats,
- Fig. 7: eine weitere Schnittdarstellung gemäß der Darstellung in Fig. 6,
- Fig. 8: eine Draufsicht auf den vorderen Teil der Fahrzeugkarosserie, und
- Fig. 9: eine Ansicht auf den vorderen Teil der Fahrzeugkarosserie von unten her betrachtet.

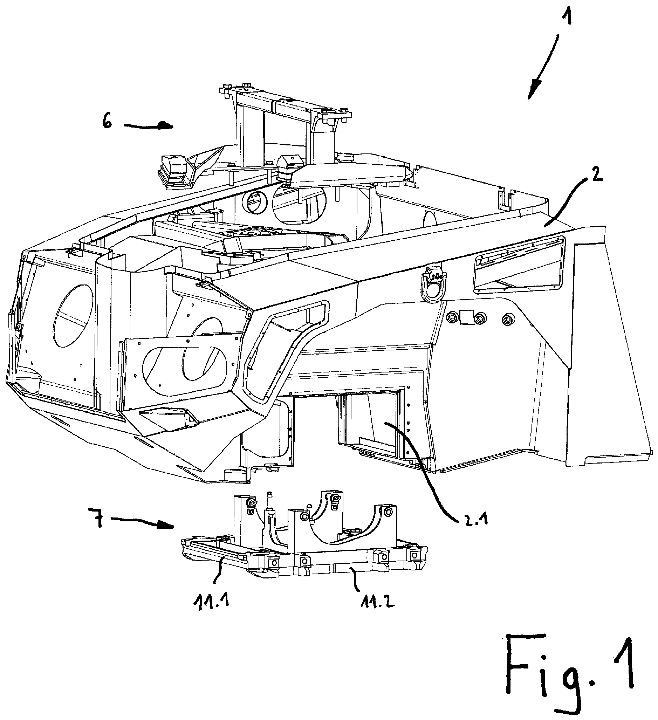

Fig. 1 zeigt in perspektivischer Ansicht die Frontpartie eines Fahrzeugs 1 mit einer selbsttragend ausgebildeten Fahrzeugkarosserie 2. Bei dem Fahrzeug 1 handelt es sich um ein für Fahrten in unwegsamem Gelände ausgelegtes militärisches Radfahrzeug mit einer gegen ballistische Bedrohungen geschützt ausgeführten Fahrzeugkarosserie 2.

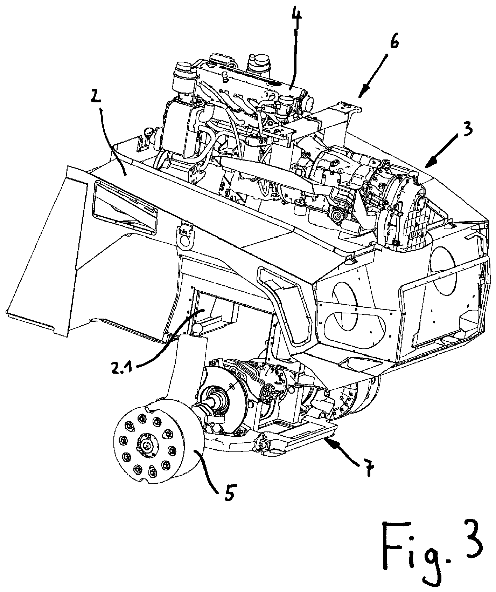

Die Fahrzeugkarosserie 2 des Fahrzeugs 1 ist in Fig. 1 ohne Antriebsaggregat 3 dargestellt, jedoch sind die zur Montage des Antriebsaggregats 3 dienenden Aggregatträger 6 und 7 dargestellt. Wie eine Zusammenschau mit der Darstellung in Fig. 3 erkennen lässt, setzt sich das Antriebsaggregat 3 aus zwei Antriebsmodulen 4, 5 zusammen, für welche jeweils ein gesonderter Aggregatträger 6, 7 vorgesehen ist. Der erste Aggregatträger 6 dient zur Aufnahme des ersten Antriebsmoduls 4, bei welchem es sich um eine Motor-/Getriebeeinheit handelt. Der zweite Aggregatträger 7 dient zur Aufnahme des zweiten Antriebsmoduls 5, welches aus dem eigentlichen Antriebsstrang, bestehend aus Differential, Seitengetriebe, Bremse, Fahrwerkskomponenten usw., besteht. Gemeinsam bilden das Antriebsmodul 4 und das Antriebsmodul 5 das Antriebsaggregat 3 des Fahrzeugs 1.

Die Montage des ersten Antriebsmoduls 4 an der selbsttragenden Fahrzeugkarosserie 2 erfolgt über den Aggregatträger 6 von oben her. Die Montage des zweiten Aggregatträgers 7 erfolgt von unten her in einer entsprechenden Ausnehmung der als Fahrzeugwanne ausgebildeten Fahrzeugkarosserie 2.

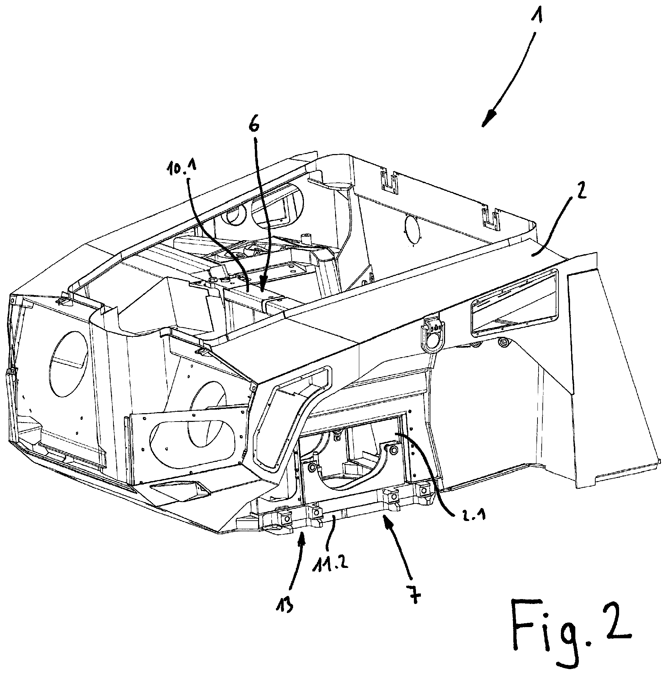

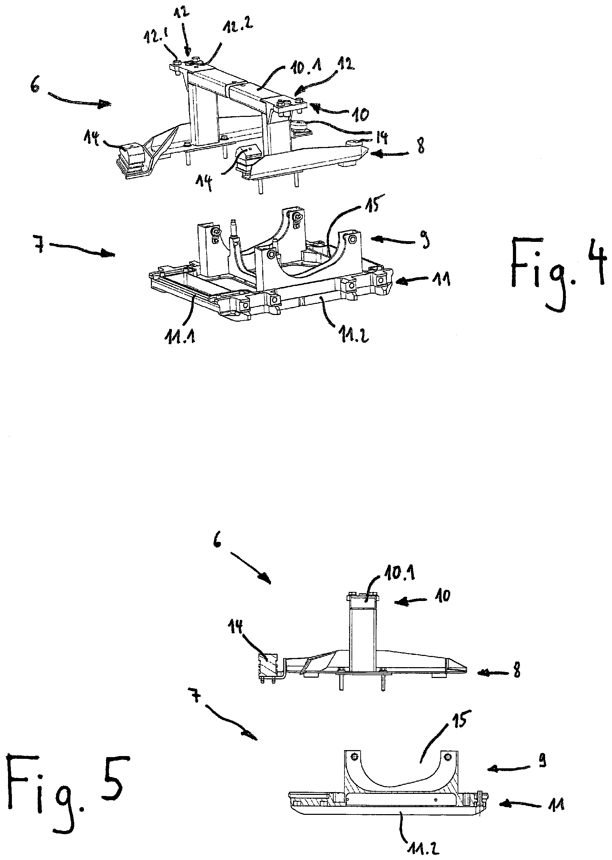

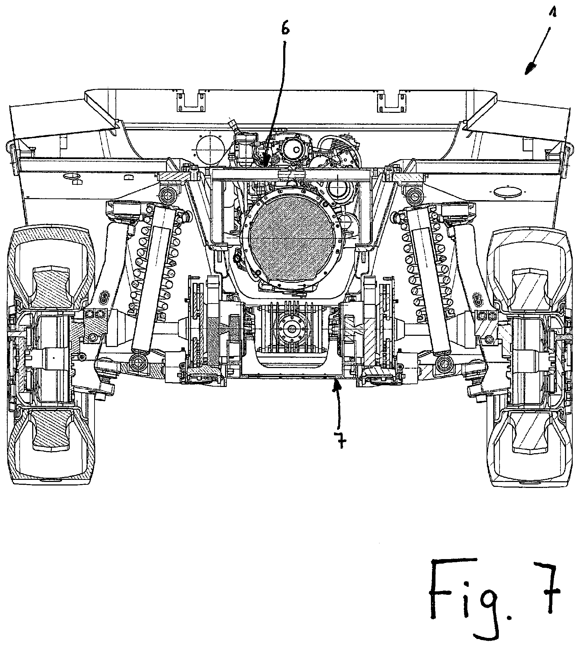

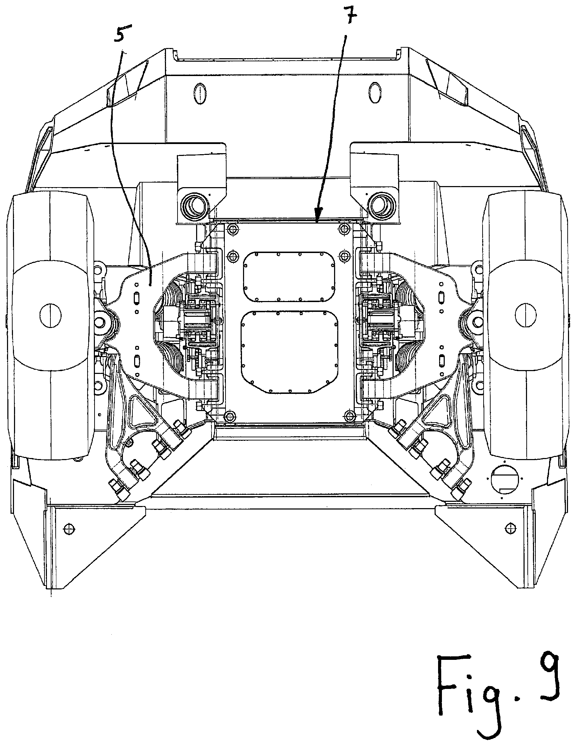

Wie die Darstellung in Fig. 2 erkennen lässt, bilden die Aggregatträger 6, 7 im montierten Zustand einen Teil der Tragstruktur der Fahrzeugkarosserie 2, vgl. auch die Darstellung in den Figuren 7 bis 9. Der von oben her in den Motorraum der Fahrzeugkarosserie 2 eingesetzte Aggregatträger 6 bildet mittels eines Querträgers 10.1 eine Querversteifung der Fahrzeugkarosserie 2. Der von unten her eingesetzte Aggregatträger 7 steift die Fahrzeugkarosserie 2 über Querträger 11.1 sowie Längsträger 11.2 sowohl in Quer- wie auch in Längsrichtung aus, vgl. auch die Darstellung in den Figuren 4 und 5. In der montierten Position steifen die Aggregatträger 6, 7 die Fahrzeugkarosserie 2 derart aus, dass im Fahrbetrieb auftretenden Lasten von der Fahrzeugkarosserie 2 aufgenommen werden ohne dass diese sich wesentlich verformt.

Wie die Darstellungen in den Fig. 4 und 5 erkennen lassen, weisen die Aggregatträger 6, 7 jeweils einen Aufnahmebereich 8, 9 zur Aufnahme des jeweiligen Antriebsmoduls 4, 5 auf.

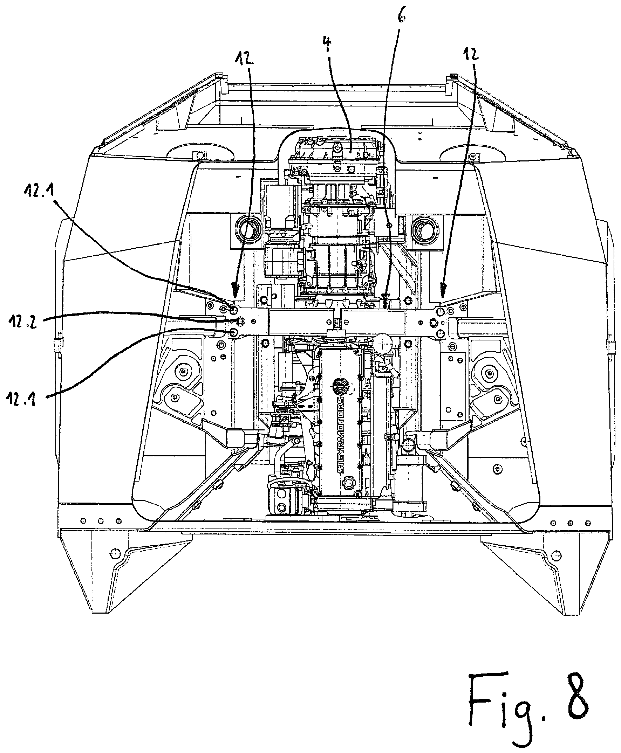

Bei dem die Motor-/Getriebeeinheit aufnehmenden Aggregatträger 6 erfolgt die Aufnahme des entsprechenden Antriebsmoduls 5 über elastisch ausgebildete Montagepunkte 14, die im Bereich des Aufnahmebereichs 8 des Aggregatträgers 6 angeordnet sind. Oberhalb des Aufnahmebereichs 8 ist der Versteifungsbereich 10 des Aggregatträgers 6 zu erkennen, welcher durch einen sich in Fahrzeugquerrichtung erstreckenden Querträger 10.1 gebildet wird. Im montierten Zustand bildet der Querträger 10.1 eine die Fahrzeugkarosserie 2 aussteifende Querverbindung von einer Seite des Motorraums hin zur gegenüberliegende Seite des Motorraums. Die Verbindung zwischen dem Aggregatträger 6 und der Fahrzeugkarosserie 2 erfolgt über an dem Querträger 10.1 vorgesehene Fügestellen 12. Die Fügestellen 12 werden gebildet von jeweils zwei Schraubbolzen 12.1 sowie einer formschlüssigen Kegelverbindung mittels eines Kegels 12.2, so dass sich eine sowohl form- wie auch kraftschlüssig mit der Fahrzeugkarosserie 2 in Verbindung stehende Fügestelle ergibt, vgl. Fig. 8. Somit lassen sich Fertigungstoleranzen ausgleichen und die im Fahrbetrieb auftretenden Lasten zuverlässig in den Querträger 10.1 einleiten.

Im Gegensatz zu dem Aggregatträger 6 ist der Versteifungsbereich 11 des Aggregatträgers 7 unterhalb dessen Aufnahmebereichs 9 angeordnet. Der Aufnahmebereich 9 wird gebildet von einer nach oben hin offenen Ausnehmung 15, in welche das als Antriebsstrang ausgebildete zweite Antriebsmodul 5 eingesetzt werden kann, vgl. auch Fig. 3. Der Aufnahmebereich 9 wird von unten her in eine korrespondierend gestaltete Öffnung 2.1 der Fahrzeugkarosserie 2 eingesetzt und mit dieser durch Verschrauben sowohl form- als auch kraftschlüssig verbunden, wodurch sich eine Fügestelle 13 ergibt. Der Versteifungsbereich 11 des Aggregatträgers 7 weist sowohl Querträger 11.1 als auch Längsträger 11.2 auf, so dass hier die Knotenpunkte der Fahrzeugkarosserie 2 in Längs- und Querrichtung verbunden werden.

Nachdem die beiden Aggregatträger 6, 7 mit den entsprechenden Antriebsmodulen 4, 5 in die Fahrzeugkarosserie 2 von oben bzw. unten her in die Fahrzeugkarosserie 2 eingesetzt und mit dieser verbunden wurden weist die Fahrzeugkarosserie 2 die für den Fahrbetrieb erforderliche Steifigkeit auf. Im nächste Schritt werden die beiden Antriebsmodule 4, 5 miteinander verbunden und das Fahrzeug 1 kann in Betrieb genommen werden.

Das vorstehend beschrieben Fahrzeug 1 und das zugehörige Montageverfahren zeichnen sich durch eine einfache, modulweise Montagemöglichkeit des Antriebsaggregats 3 aus, wobei gleichzeitig eine Aussteifung der Fahrzeugkarosserie 2 erreicht wird ohne deren Gesamtgewicht - verglichen mit herkömmlichen selbsttragenden Fahrzeugkarosserien - nennenswert zu steigern.

### Bezugszeichen:

- 1: Fahrzeug
- 2: Fahrzeugkarosserie
- 2.1: Öffnung
- 3: Antriebsaggregat
- 4: Antriebsmodul
- 5: Antriebsmodul
- 6: Aggregatträger
- 7: Aggregatträger
- 8: Aufnahmebereich
- 9: Aufnahmebereich
- 10: Versteifungsbereich
- 10.1: Querträger
- 11: Versteifungsbereich
- 11.1: Querträger
- 11.2: Längsträger
- 12: Fügestelle
- 12.1: Schraubbolzen
- 12.2: Kegel
- 13: Fügestelle
- 14: Montagepunkt

## Patentansprüche

1. Fahrzeug, insbesondere militärisches Fahrzeug, mit einer selbsttragend ausgebildeten Fahrzeugkarosserie (2) und einem Antriebsaggregat (3) zum Antrieb des Fahrzeugs, wobei das Antriebsaggregat (3) über einen Aggregatträger (6, 7) mit der Fahrzeugkarosserie (2) verbunden ist, wobei der Aggregatträger (6, 7) einen Teil der Tragstruktur der Fahrzeugkarosserie (2) bildet,
**dadurch gekennzeichnet,**
**dass** das Antriebsaggregat (3) ein erstes als Motor-/Getriebeeinheit ausgebildetes Antriebsmodul (4) und ein zweites als Antriebsachse ausgebildetes Antriebsmodul (5) aufweist, die über separate Aggregatträger (6, 7) mit der Fahrzeugkarosserie (2) verbunden sind, wobei ein Aggregatträger (6) als Montageeinheit mit dem ersten Antriebsmodul (4) von oben her und ein Aggregatträger(7) als Montageeinheit mit dem zweiten Antriebsmodul (5) von unten her mit der Fahrzeugkarosserie (2) verbunden ist.

2. Fahrzeug nach einem der vorhergehenden Ansprüche, **dadurch gekennzeichnet, dass** die Aggregatträger (6, 7) jeweils einen Aufnahmebereich (8, 9) zur Aufnahme des Antriebsmoduls (4, 5) und einen in die Tragstruktur der Fahrzeugkarosserie (2) integrierten Versteifungsbereich (10, 11) aufweisen.

3. Fahrzeug nach Anspruch 2, **dadurch gekennzeichnet, dass** die Versteifungsbereiche (10, 11) von in die Tragstruktur der Fahrzeugkarosserie (2) integrierten Längs- und/oder Querträgern (10.1, 11.1, 11.2) gebildet werden.

4. Fahrzeug nach einem der Ansprüche 2 oder 3, **dadurch gekennzeichnet, dass** der Versteifungsbereich (10) des ersten Aggregatträgers (6) von einem sich oberhalb des Aufnahmebereichs (8) erstreckenden Querträger (10.1) gebildet wird.

5. Fahrzeug nach einem der Ansprüche 2 bis 4, **dadurch gekennzeichnet, dass** der Versteifungsbereich (11) des zweiten Aggregatträgers (7) von sich unterhalb des Aufnahmebereichs (9) erstreckenden Längs- und/oder Querträgern (11.1, 11.2) gebildet wird.

6. Fahrzeug nach einem der Ansprüche 2 bis 5, **dadurch gekennzeichnet, dass** die Versteifungsbereiche (10, 11) über kraft- und formschlüssige Fügestellen (12, 13) in die Tragstruktur der Fahrzeugkarosserie (2) eingebunden sind.

7. Verfahren zur Montage eines Antriebsaggregats (3) in einem eine selbsttragend ausgebildete Fahrzeugkarosserie (2) aufweisenden Fahrzeug (1), wobei das Antriebsaggregat (3) über einen Aggregatträger (6, 7) mit der Fahrzeugkarosserie (2) verbunden wird und der Aggregatträger (6, 7) im montierten Zustand einen Teil der Tragstruktur der Fahrzeugkarosserie (2) bildet,
**dadurch gekennzeichnet,**
**dass** das Antriebsaggregat (3) ein erstes als Motor-/Getriebeeinheit ausgebildetes Antriebsmodul (4) und ein zweites als Antriebsachse ausgebildetes Antriebsmodul (5) aufweist, die über separate Aggregatträger (6, 7) mit der Fahrzeugkarosserie (2) verbunden werden, wobei ein Aggregatträger (6) als Montageeinheit mit dem ersten Antriebsmodul (4) von oben her und ein Aggregatträger(7) als Montageeinheit mit dem zweiten Antriebsmodul (5) von unten her mit der Fahrzeugkarosserie (2) verbunden werden.

8. Verfahren nach Anspruch 7, **dadurch gekennzeichnet, dass** zunächst die Aggregatträger (6, 7) mit der Fahrzeugkarosserie (2) und anschließend die Antriebsmodule (4, 5) miteinander verbunden werden.

9. Verfahren nach einem der Ansprüche 7 oder 8, **dadurch gekennzeichnet, dass** ein Aggregatträger (6) als vormontierte Montageeinheit mit dem ersten Antriebsmodul (4) und ein Aggregatträger (7) als vormontierte Montageeinheit mit dem zweiten Antriebsmodul (5) mit der Fahrzeugkarosserie (2) verbunden wird.

10. Verfahren nach einem der Ansprüche 7 bis 11, **dadurch gekennzeichnet, dass** die Aggregatträger (6, 7) jeweils einen Aufnahmebereich (8, 9) zur Aufnahme des Antriebsmoduls (4, 5) und einen Versteifungsbereich (10, 11) aufweisen, der in die Tragstruktur der Fahrzeugkarosserie (2) integriert wird.

11. Verfahren nach Anspruch 10, **dadurch gekennzeichnet, dass** die Versteifungsbereiche (10, 11) über kraft- und formschlüssige Fügestellen (12, 13) in die Tragstruktur der Fahrzeugkarosserie (2) eingebunden werden.

## Claims

1. Vehicle, in particular military vehicle, having a self-supporting vehicle body (2) and a drive assembly (3) for driving the vehicle, wherein the drive assembly (3) is connected to the vehicle body (2) via an assembly support (6, 7), wherein the assembly support (6, 7) forms a part of the support structure of the vehicle body (2),
**characterized in that**
the drive assembly (3) has a first drive module (4) formed as an engine/gearbox unit and a second drive module (5) formed as a drive axle, which drive modules are connected to the vehicle body (2) via separate assembly supports (6, 7), wherein an assembly support (6) is connected to the vehicle body (2) as a mounting unit with the first drive module (4) from above and an assembly support (7) is connected to the vehicle body (2) as a mounting unit with the second drive module (5) from below.

2. Vehicle according to one of the preceding claims, **characterized in that** the assembly supports (6, 7) each have a receiving region (8, 9) for receiving the drive module (4, 5) and a reinforcing region (10, 11) integrated into the support structure of the vehicle body (2).

3. Vehicle according to Claim 2, **characterized in that** the reinforcing regions (10, 11) are formed by longitudinal and/or cross members (10.1, 11.1, 11.2) integrated into the support structure of the vehicle body (2).

4. Vehicle according to either of Claims 2 or 3, **characterized in that** the reinforcing region (10) of the first assembly support (6) is formed by a cross member (10.1) extending above the receiving region (8).

5. Vehicle according to one of Claims 2 to 4, **characterized in that** the reinforcing region (11) of the second assembly support (7) is formed by longitudinal and/or cross members (11.1, 11.2) extending below the receiving region (9).

6. Vehicle according to one of Claims 2 to 5, **characterized in that** the reinforcing regions (10, 11) are incorporated into the support structure of the vehicle body (2) via force and form-locking joints (12, 13).

7. Method for mounting a drive assembly (3) in a vehicle (1) having a self-supporting vehicle body (2), wherein the drive assembly (3) is connected to the vehicle body (2) via an assembly support (6, 7) and the assembly support (6, 7) forms, in the mounted state, a part of the support structure of the vehicle body (2),
**characterized in that**
the drive assembly (3) has a first drive module (4) formed as an engine/gearbox unit and a second drive module (5) formed as a drive axle, which drive modules are connected to the vehicle body (2) via separate assembly supports (6, 7), wherein an assembly support (6) is connected to the vehicle body (2) as a mounting unit with the first drive module (4) from above and an assembly support (7) is connected to the vehicle body (2) as a mounting unit with the second drive module (5) from below.

8. Method according to Claim 7, **characterized in that** first the assembly supports (6, 7) are connected to the vehicle body (2) and then the drive modules (4, 5) are connected to one another.

9. Method according to either of Claims 7 or 8, **characterized in that** an assembly support (6) is connected to the vehicle body (2) as a premounted mounting unit with the first drive module (4) and an assembly support (7) is connected to the vehicle body (2) as a premounted mounting unit with the second drive module (5).

10. Method according to one of Claims 7 to 11, **characterized in that** the assembly supports (6, 7) each have a receiving region (8, 9) for receiving the drive module (4, 5) and a reinforcing region (10, 11) which is integrated into the support structure of the vehicle body (2).

11. Method according to Claim 10, **characterized in that** the reinforcing regions (10, 11) are incorporated into the support structure of the vehicle body (2) via force- and form-locking joints (12, 13).

## Revendications

1. Véhicule, en particulier véhicule militaire, avec une carrosserie de véhicule autoportante (2) et une unité d'entraînement (3) assurant l'entraînement du véhicule, dans lequel l'unité d'entraînement (3) est reliée à la carrosserie de véhicule (2) par un support d'unité (6, 7), dans lequel le support d'unité (6, 7) forme une partie de la structure portante de la carrosserie de véhicule (2), **caractérisé en ce que** l'unité d'entraînement (3) présente un premier module d'entraînement (4) constitué par une unité de moteur/- boîte de vitesses et un deuxième module d'entraînement (5) constitué par un essieu d'entraînement, qui sont reliés à la carrosserie de véhicule (2) par des supports d'unité séparés (6, 7), dans lequel un support d'unité (6) est relié par le haut en tant qu'unité de montage avec le premier module d'entraînement (4) et un support d'unité (7) est relié par le bas en tant qu'unité de montage avec le deuxième module d'entraînement (5) à la carrosserie de véhicule (2).

2. Véhicule selon l'une quelconque des revendications précédentes, **caractérisé en ce que** les supports d'unité (6, 7) présentent respectivement une région de réception (8, 9) pour la réception du module d'entraînement (4, 5) et une région de renforcement (10, 11) intégrée dans la structure portante de la carrosserie de véhicule (2).

3. Véhicule selon la revendication 2, **caractérisé en ce que** les régions de renforcement (10, 11) sont formées par des supports longitudinaux et/ou transversaux (10.1, 11.1, 11.2) intégrés dans la structure portante de la carrosserie de véhicule (2).

4. Véhicule selon l'une des revendications 2 ou 3, **caractérisé en ce que** la région de renforcement (10) du premier support d'unité (6) est formée par une traverse (10.1) s'étendant au-dessus de la région de réception (8).

5. Véhicule selon l'une des revendications 2 à 4, **caractérisé en ce que** la région de renforcement (11) du deuxième support d'unité (7) est formée par des supports longitudinaux et/ou transversaux (11.1, 11.2) s'étendant en dessous de la région de réception (9).

6. Véhicule selon l'une des revendications 2 à 5, **caractérisé en ce que** les régions de renforcement (10, 11) sont intégrées dans la structure portante de la carrosserie de véhicule (2) par des points de jonction par adhérence et par emboîtement (12, 13).

7. Procédé de montage d'une unité d'entraînement (3) dans un véhicule (1) présentant une carrosserie de véhicule autoportante (2), dans lequel on relie l'unité d'entraînement (3) à la carrosserie de véhicule (2) par un support d'unité (6, 7) et le support d'unité (6, 7) forme à l'état monté une partie de la structure portante de la carrosserie de véhicule (2), **caractérisé en ce que** l'unité d'entraînement (3) présente un premier module d'entraînement (4) constitué par une unité de moteur/boîte de vitesses et un deuxième module d'entraînement (5) constitué par un essieu d'entraînement, que l'on relie à la carrosserie de véhicule (2) par des supports d'unité séparés (6, 7), dans lequel on relie un support d'unité (6) par le haut en tant qu'unité de montage avec le premier module d'entraînement (4) et un support d'unité (7) par le bas en tant qu'unité de montage avec le deuxième module d'entraînement (5) à la carrosserie de véhicule (2).

8. Procédé selon la revendication 7, **caractérisé en ce que** l'on relie d'abord les supports d'unité (6, 7) à la carrosserie de véhicule (2) et ensuite les modules d'entraînement (4, 5) l'un à l'autre.

9. Procédé selon une des revendications 7 ou 8, **caractérisé en ce que** l'on relie un support d'unité (6) en tant qu'unité de montage pré-montée avec le premier module d'entraînement (4) et un support d'unité (7) en tant qu'unité de montage pré-montée avec le deuxième module d'entraînement (5) à la carrosserie de véhicule (2).

10. Procédé selon l'une quelconque des revendications 7 à 11, **caractérisé en ce que** les supports d'unité (6, 7) présentent respectivement une région de réception (8, 9) pour la réception du module d'entraînement (4, 5) et une région de renforcement (10, 11), qui est intégrée dans la structure portante de la carrosserie de véhicule (2).

11. Procédé selon la revendication 10, **caractérisé en ce que** l'on intègre les régions de renforcement (10, 11) dans la structure portante de la carrosserie de véhicule (2) par des points de jonction par adhérence et par emboîtement (12, 13).
